# EUROPÄISCHE PATENTSCHRIFT

(11) **EP 2 445 351 B1**
(45) Veröffentlichungstag und Bekanntmachung des Hinweises auf die Patenterteilung: **12.03.2014**
(21) Anmeldenummer: 10744685.8
(22) Anmeldetag: 22.06.2010
(51) Int. Cl.: A23B 5/005

(54) **METHODE UND VORRICHTUNG ZUR BEHANDLUNG VON EIERN IN SCHALE**
METHOD AND DEVICE FOR TREATING EGGS IN SHELLS
PROCÉDÉ ET DISPOSITIF POUR TRAITER DES OEUFS DANS LEUR COQUILLE

(30) Priorität: 23.06.2009 DE 102009030260; 30.10.2009 DE 102009051414
(43) Veröffentlichungstag der Anmeldung: 02.05.2012
(73) Patentinhaber: Kobil Systems GmbH, 67547 Worms (DE)
(72) Erfinder: KOYUN, Ismail, 67549 Worms (DE)
(74) Vertreter: Schmitt, Meinrad
(86) Internationale Anmeldenummer: PCT/EP2010/003741
(87) Internationale Veröffentlichungsnummer: WO 2010/149330

(56) Entgegenhaltungen:
- WO-A-95/26636
- WO-A-99/33362
- WO-A-2005/102064
- WO-A2-2009/132856
- US-A- 2 673 160
- US-A- 4 808 425
- US-A- 5 589 211
- US-A1- 2002 041 921

## Beschreibung

Die Erfindung bezieht sich auf eine Methode zur Behandlung, insbesondere Haltbarmachung von Eiern in ihren Schalen auf der Grundlage der in der Lebenstechnik bekannten Pasteurisation.

Bekanntlich wird ein Geflügelei, welches nach der Muttermilch über die ausgewogensten Nährstoffwerte verfügt, während des Legens beim Durchgang durch die Kloake mit Sekreten des Verdauungs- und Hamsystems beschmutzt und sogar im oberen Bereich des Eileiters können aus Gründen der betreffenden Umwelt oder der Region im Ei und auf der Eierschale Bakterien vorhanden sein. Somit sind Ei und Eierschale nicht steril.

Die Vernichtung von Mikroorganismen durch Wärme ist eine Methode, die seit langem bekannt ist. Jedoch führen Unterschiede im Siedepunkt aufgrund unterschiedlicher Höhen vom Meeresspiegel, Verwendung unstetiger Wärme und nicht konstant eingehaltener Zeitdauern dazu, dass eine Mehrzahl bzw. nur ein Teil der im Ei enthaltenen Organismen vernichtet wird. Schließlich können die bekannten Methoden oder Verfahrensweisen zu einer grundlegenden Veränderung im Ei führen.

Unter Nahrungsmitteln, welche einer Wärmebehandlung unterzogen werden, ist die Milch das bekannteste und am meisten genutzte. Bekanntlich erfolgt bei der Anwendung der Pasteurisation und der UHT-Methode an Milch keine grundlegende Veränderung. Milch und Eier beinhalten sowohl Mikroorganismen und Viren, die wenig resistent gegenüber Wärme sind, (wie z.B. Salmonellen) als auch solche, die auf Grund der Umwelt/ Region gegenüber Wärme resistent sind.

Mit dem Fortschreiten der Wissenschaft sind einige bis jetzt unbekannte Krankheiten in Beschreibungen festgehalten worden. Mit der Zeit schreiten diese Forschungen weiter voran. Für einige dieser schädlichen Mikroorganismen und Viren, die aus diesen Beschreibungen hervorgehen, werden neue Techniken und sehrfein eingestellte Schock-Methoden entwickelt. In Fällen, in denen die Pasteurisationsmethode keine ausreichende Wirkung zeigt, werden Schockmethoden, wie die UHT-Methode angewendet und empfohlen.

### AUFGABE DER ERFINDUNG

Das Ziel des in dieser Methode verwendeten Prozesses ist es, schädliche Mikroorganismen, die mit niedriger Wärme (Pasteurisation) vernichtet werden können, und ferner schädliche Mikroorganismen und Viren, die mit niedriger Wärme nicht vernichtet werden können, zu vernichten oder vorübergehend einzuschläfern, wobei Veränderungen der Eier und/oder eine Denaturierung deren Proteine vermieden werden sollen. Die Methode soll für die Behandlung von Eiern beliebiger Art geeignet sein, insbesondere Eier als Lebensmittel oder Genoblast-Eier, welche den Kern der befruchteten Eizelle enthalten. Es soll ferner erreicht werden, die Menge der Mikroorganismen, insbesondere Salmonellen und Bakterien, auf ein vorgegebenes Niveau und / oder um einen vorgegebenen Betrag von mindestens log 7 zu rechnen, bei welchem die mikrobielle Belastung die Gesundheit eines Verbrauchers nichts gefährdet. Bei befruchteten Eiern bzw. Genoblast-Eiern soll eine Schädigung des Embryo vermieden werden und / oder das Ei von Mikroben bzw. Bakterien gereinigt werden, welche die Schlüpfkraft nachteilig beeinträchtigen.

### ANGEWENDETE METHODE

Die poröse oder nicht poröse Schale des Eies respektive der Eier wird unter Druck und ohne Zusatz von chemischen Mitteln mit einer natürlichen Wärme-Technologie (z.B. UHT-Technik) behandelt. Dabei werden zunächst im niedrigen Temperaturbereich und nachfolgend in einem hohen Temperaturbereich wärmeempfindliche oder widerstandsfähige Mikroorganismen und Viren neutralisiert bzw. deren Fortpflanzung gestoppt. Sofern die Eier als Lebensmittel genutzt werden sollen, werden sie anschließend gemäß den geltenden gesetzlichen Bestimmungen, insbesondere dem Lebensmittelgesetz, bevorzugt mittels Paraffin für Lebensmittel oder mittels anderer zugelassener organischer Substanzen umhüllt oder aseptisch verpackt, um die Lebensdauer zu verlängern. Bei Genoblasten oder Genoblast-Eiem mit dem Kern und/oder der befruchteten Eizelle kann die Umhüllung oder aseptische Verpackung mit anderen Substanzen erfolgen oder entfallen.

### BESCHREIBUNG DER METHODE

Die Methode, die in den Ansprüchen 1 bis 9 beschrieben wird, umfasst die Anwendung von UHT (Ultra High Temperature), bei der die Funktionalität des Eies geschützt und zugleich Mikroorganismen und Viren, die gegen niedrige Wärme resistent sind, abgetötet werden. Bei Eiern mit Schalen, die regional- bzw. umweltbedingt erhöhte Anteile an Viren und mikrobiologischer Belastung aufweisen, ist die Anwendung der UHT-Technik, welche eine Schockmethode darstellt, von besonderem Vorteil.

An die Stelle der heutzutage nur noch selten angewendeten Batch-Methode L. Pasteurs (30-minütige Pasteurisation bei 63 °C) ist ein kontinuierliches Verfahren der Wärmesteigerung und Zeitverkürzung, insbesondere wie folgt, getreten:
- Pasteurisation =: Hohe Wärme, größer als 70°C, insbesondere
Kurze Wartezeit oder Verweilzeit (Holding time), die größer als 15 Sekunden ist und bevorzugt maximal 30 Sekunden beträgt Abkühlung (+ 4, + 5 °C)

Die wichtigste Eigenschaft der Methode ist die Vernichtung sowohl von nicht wärmeresistenten als auch resistenten Mikroorganismen und Viren, ohne Denaturierung der Proteine der Eier mit Schalen.

Werden erfindungsgemäß in der Methode die Wärme und Zeit richtig dosiert, treten keine grundlegenden Veränderungen im Eigelb und im Eiweiß auf. Folgende Methoden oder Verfahrensschritte werden für die Pasteurisation und Ultrahocherhitzung vorgesehen:
HTST Pasteurisation 70-75 °C / 15 bis 30 Sekunden, insbesondere 72°C / 15 Sekunden
ULTRA PASTEURISATION 125-138 °C / 2-4 Sekunden
UHT größer als 135 °C / größer als 1 Sekunde
HTST = High Temperature-Short Time (Hohe Temperatur-kurze Zeit)
UHT = Ultra High Temperature ( Sehr hohe Temperatur ) = Ultrahocherhietzung

Wie in den obigen Informationen erkennbar, spielt die Temperatur bzw. Zeit eine sehr wichtige Rolle. Bei der erfindungsgemäßen Methode und/oder der Vorrichtung kommen sehr empfindliche elektronische Geräte zur Wärmeleitung und sehr empfindlich eingestellte Werte für positiven Druck / Überdruck zur Anwendung. Von besonderer Bedeutung ist erfindungsgemäß die Kombination mit die Behandlung und/oder Beaufschlagung der Eier mit einem flüssigen oder dampf- oder gasförmigen Medium, wie z.B. Luft, mit vorgebbarem Druck in Kombination mit der Wärmebehandlung, wodurch in überraschend einfacher Weise eine Beschädigung der Eierschale vermieden wird. Der auf die Eier einwirkende Druck und/oder Überdruck wird insbesondere unter Berücksichtigung der Festigkeit der Schalen der zu behandelnden Eier mit 0,4 bis 1,2 Bar vorgegeben und bevorzugt im Bereich von 0,5 bis 1 Bar.

Die Pasteurisation im Rahmen der bekannten Technologie verläuft insbesondere derart, dass die Eier mit Schale bevorzugt mit Hilfe eines Wasserbades oder auf dem Weg verschiedener Wärmetransfers von der Eierschale zum Eiweiß und zum Eigelb erwärmt und pasteurisiert werden.

Allerdings ist diese Methode nicht immer erfolgreich. Wenn durch umweltbedingte Problemen auf der Eierschale befindliche Mikroorganismen aus verschiedenen Gründen ins Innere des Eis gelangen, können diese Mikroorganismen vernichtet werden, wenn die Wartezeit kurz ist, die Wärmezuführung kurz ist, die mikrobiologische Belastung gering ist und wenn sich diese schädlichen Mikroorganismen nahe der Schale aufhalten. In allen anderen Fällen jedoch und wenn während der Ernährung des Huhns die schädlichen Bakterien bzw. Viren, insbesondere Salmonellen, in die Blutlaufbahn des Huhns gelangen und nach dem Eintritt ins Ei bis ins Eigelb vordringen, kann es sein, dass die Pasteurisation keine Lösung darstellt und nichts gegen umwelt- bzw. regionalbedingte schädliche wärmeresistente Mikroorganismen und Viren ausrichten kann. In diesen Fällen gelangt bevorzugt die Ultra Pasteurisation zusätzlich zum Einsatz.

### ZUSAMMENFASSUNG DER METHODE

Bei der bekannten und angewendeten Pasteurisation werden in dem System der Eier mit Schalen verschiedene Salmonellenarten und schädliche Mikroorganismen, die sich Nahe der Schale befinden ins Visier genommen.

In Regionen, in denen die mikrobiologische Belastung hoch ist oder nicht unter Kontrolle gehalten werden kann, benutzt die Milchindustrie die Pasteurisation + Ultrahocherhitzung. Die UHT-Methode macht einen Weltanteil von 93% aus, d.h. dass fast die gesamte Welt auf die UHT-Methode vertraut. Da die mikrobiologische Belastung der Milch, die beim Melken noch steril ist, aufgrund der äußeren Einwirkung steigt und um ihre Haltbarkeit im Ladenregal zu steigern, wird die Milch zuerst pasteurisiert und danach mit der UHT-Methode behandelt.

Beim Ei hingegen, wird die UHT-Methode angewendet, da es bereits beim Legen nicht mehr steril ist, die mikrobiologische Belastung des Eies / der Eierschale durch äußere Einwirkungen ansteigt, aufgrund aktueller schädlicher Mikroorganismen und Viren und um die Haltbarkeit im Ladenregal zu steigern.

Im Folgenden wird eine kurze Zusammenfassung der Methode beispielshaft aufgeführt:
a) WASCHEN
   Kurz nach dem Legen der Eier werden sie auf +4 bis +5 °C gekühlt und direkt im Anschluß darauf bei +40 °C gewaschen, gesäubert und bei 43 °C abgespült, getrocknet.
b) ULTRAHOCHERHITZUNG, UHT
   In diesem UHT-Abschnitt wurden zwei Methoden getestet und mit beiden Methoden erfolgreiche Resultate erzielt (diese Methoden stehen in Abhängigkeit zur mikrobiologischen Belastung).
   In Methode 1 werden die abgespülten Eier in direkter Form nach einer Holder-Zeit von 72°C / 15 Sekunden, dann 125°C / 4 Sekunden und nachfolgend 142°C / 2 Sekunden erhitzt und schließlich schockartig auf +4 oder +5 °C gekühlt.
   In Methode 2 werden die abgespülten Eier nach einer Holder-Zeit von 72°C / 15 Sekunden und 142°C / 2 Sekunden erhitzt und schließlich schockartig auf +4 bis +5°C gekühlt.
c) UMHÜLLEN ODER VERPACKEN
   Die abgekühlten Eier werden gemäß der Nahrungsmittelvorschrift (Nahrungsmittel Paraffin, organische Materialien, usw.) umhüllt oder aseptisch verpackt.

Anmerkung: Das bei der UHT-Methode verwendete Wasserwird bei 137°C und 1800 Sekunden Holder-Zeit sterilisiert, bevor es zum Erhitzen und Abkühlen verwendet wird. Außerdem werden die Abschnitte, die bei der Ultrahocherhitzung und der Umhüllung verwendet werden vor der Anwendung sterilisiert und durch positiven Druck (positiver Druck größer als 0,5 Bar) geschützt. Diese verwendete UHT-Schockmethode führt zu keinerlei grundlegender Veränderung bei den Eiern. Sie hebt sich zudem dadurch hervor, dass sie den Ansprüchen der menschlichen Gesundheit gerecht wird. So ist sie eine Methode, die sich bei aktuellen und in der Aktualisierung inbegriffenen schädlichen Mikroorganismen und Viren bewähren kann.

### KONTROLLE UND ANALYSE

Die durch ein Impf-Verfahren injizierten Salmonellen und durch Infizierung übertragenen Bakterien wurden in den Methode 1 und Methode 2 genannten UHT-Methoden 47-mal getestet. Die Testergebnisse sind unten aufgeführt.

Hefe und Schimmel wurden auf einem PDA-Nährboden unter Benutzung einer klassischen Plaque Verdünnungsausstrichmethode auf -1 verdünnt. Dabei wurden keine Mikroorganismen beobachtet.

Auch Coliform wurden mittels VRBA-Nährboden bei 35 °C Inkubation mit dem oben angewendeten Verfahren analysiert. Es wurde beobachtet, dass alles sauber war, dennoch wurden Salmonellen mit allen ihren Stadien gemacht. Bei BSA konnten keine schwarzen Kolonien nachgewiesen werden.

Bei der Analyse von Staphylokokkus Aureus wurden keine schwarzen Kolonien beobachtet.

Ein Total Viable Count fiel negativ aus.

In den durchgeführten Qualitätsuntersuchungen wurde bezüglich des Gewichts des Eis, dem Index des Eigelbs und dessen funktioneller Eigenschaft kein grundlegender Verlust festgestellt.

Anmerkung: Die Eierschale wurde mit einer speziellen Methode durchbohrt und genau in die Mitte des Eigelbs ein Wärmesensor, insbesondere PT 100, eingeführt. Diese Methode wurde bei allen getesteten Eiern angewendet. Die Werte der digitalen Anzeige und des Übersetzers oder Überträgers (Ohm-mA) des Wärmesensors bzw. PT 100 sind in die analoge Inputkarte des PLC eingespeist worden, so dass alle Temperaturwerte mittels einer Grafik kontrolliert und gespeichert werden konnten. Die PID Werte des Wärmesystems wurden sehr fein eingestellt und das DeltaT wurde als 0,1 bestimmt.

### FLUSSDIAGRAMM UND ARBEITSSCHRITTE DER METHODE UND DER VORRICHTUNG ZUR DURCHFÜHRUNG DERSELBEN

Die Erfindung wird nachfolgend anhand der in der Zeichnung dargestellten Ausführungsbeispiele näher erläutert, ohne dass insoweit eine Beschränkung erfolgt. Anhand von Fig. 1 bis Fig. 3 werden die Methode und die Vorrichtung gemäß der nicht vorveröffentlichten WO 2009/132856 A2 der internationalen Patentanmeldung der Anmelderin erläutert. Die vorliegende Erfindung ist hierzu eine Weiterbildung in Kombination mit zusätzlichen Merkmalen und Maßnahmen, und sie wird nachfolgend anhand von Fig. 4 und Fig. 5 näher ausgeführt.

Wie oben erläutert, dient die Erfindung zur Behandlung von Geflügeleiern unabhängig von deren weiteren Verwendung, insbesondere als Lebensmittel oder als Genoblast-Eier, welche letztere bevorzugt zur Aufzucht von Geflügel bzw. Küken vorgesehen sind. Es sei ausdrücklich darauf hingewiesen, dass im Rahmen der Erfindung an Stelle des Mediums Wasser ein anderes flüssiges oder dampfförmiges oder gasförmiges Medium in analoger Weise zu Behandlung der Geflügeleier mit Schale zur Verwendung gelangen kann. Es zeigen in schematischen Darstellungen:

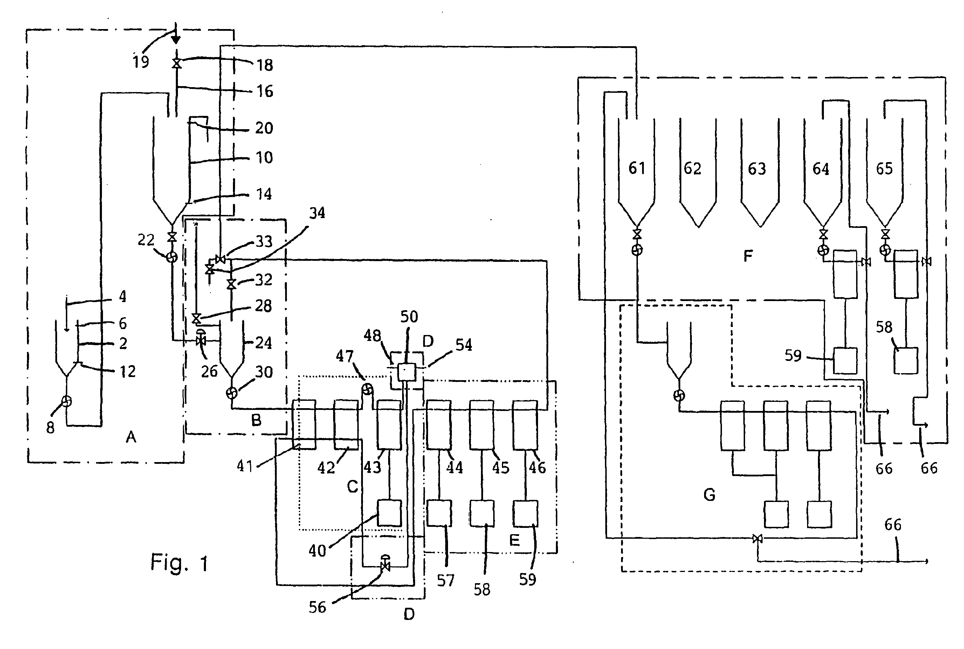

Fig. 1 die Sterilisation bzw. Sterilisationseinheit des benutzten Wassers und die Nutzungsbereiche, welche wie folgt markiert sind:

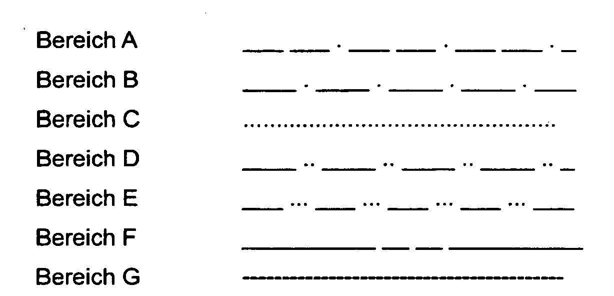

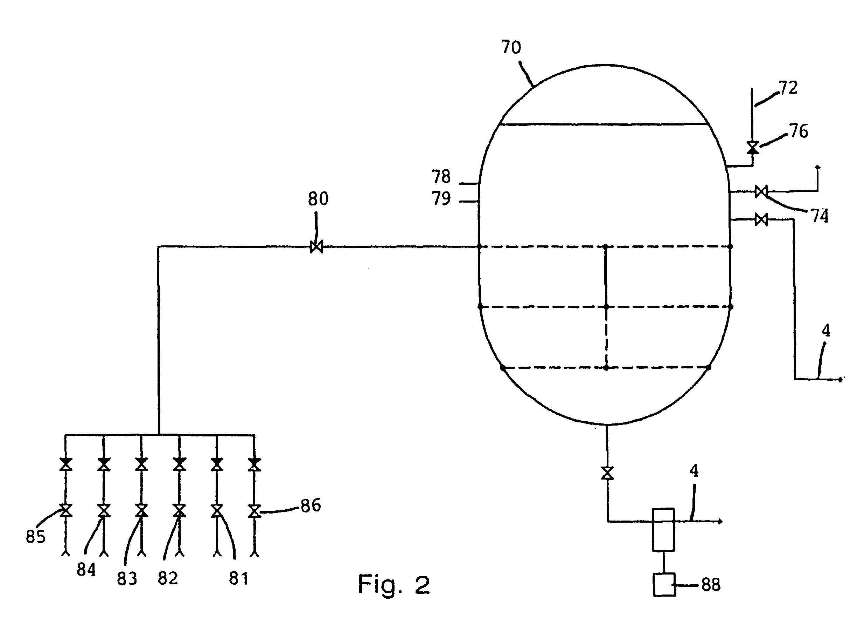

Fig. 2 eine Batch-Sterilisation bzw. zeitlich gestaffelte Sterilisation mittels eines Druckbehälters, welcher die zu sterilisierenden Eier enthält und welchem sterilisiertes Wasser unterschiedlicher Temperatur zugeführt wird,

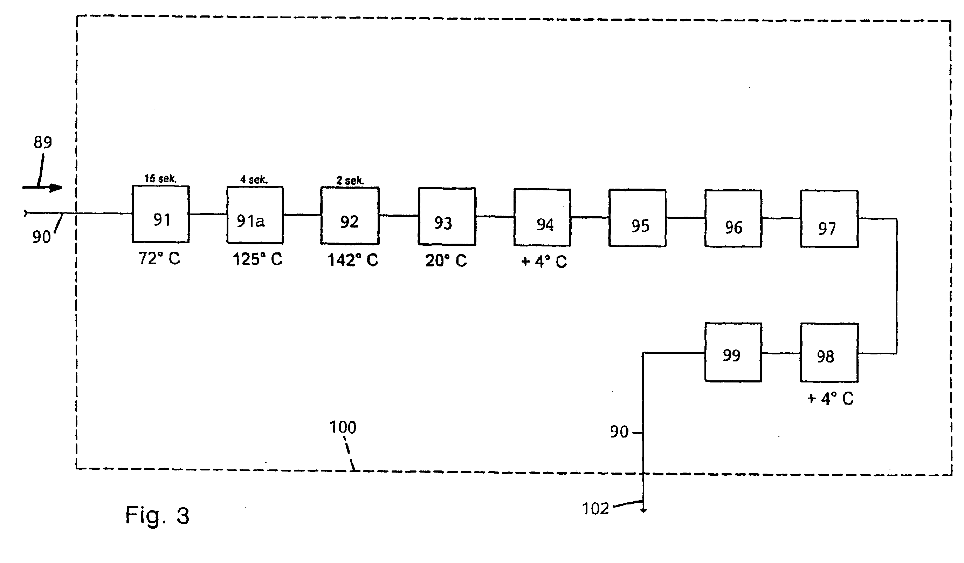

Fig. 3 ein kontinuierlich arbeitendes System,

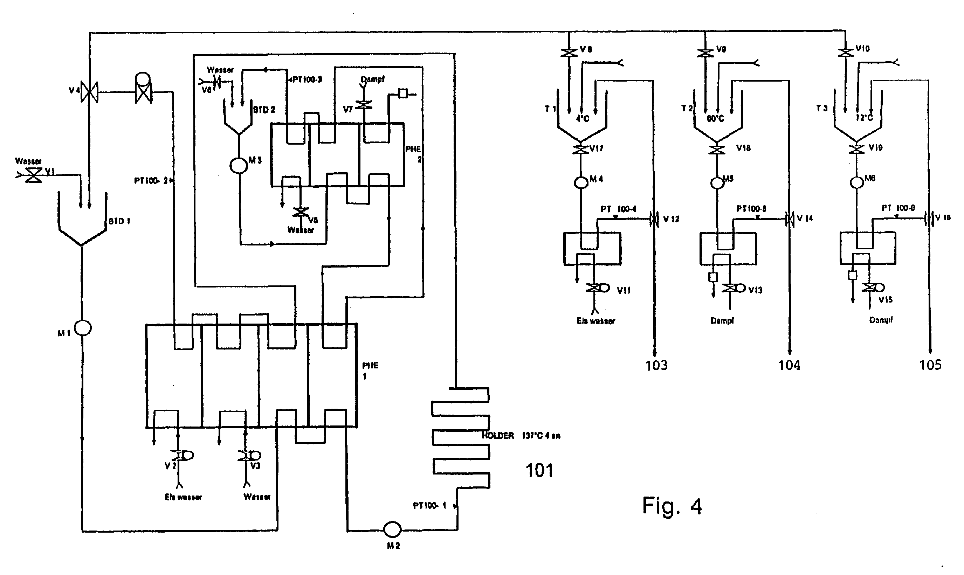

Fig. 4 eine besondere Ausgestaltung der erfindungsgemäßen Sterilisierung bzw. Sterilisationseinheit, insbesondere des Wassers,

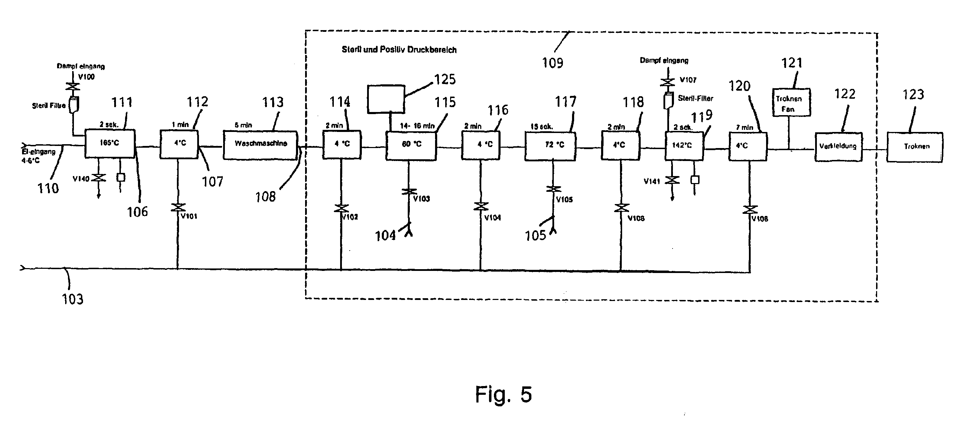

Fig. 5 eine besondere Ausgestaltung der erfindungsgemäßen Sterilisierung der Eier mit Schale.

Gemäß Fig. 1 ist im Bereich A ein erster Tank 2 vorgesehen, mit dessen Hilfe das aus den Systemen bzw. Vorrichtungen gemäß Fig. 2 oder Fig. 3 zurückkehrendes bzw. zurückgeführtes Wasser gemäß Pfeil 4 einer erneuten Sterilisation zugeführt werden kann. Dieser erste kleine Tank 2 ist ein Ausgleichstank, beispielsweise für 250 Liter, in welchem das bearbeitetete Wasser 4 aus dem Prozess als erstes gelagert wird. Wenn eine Sonde 6 für hohes Niveau aktiv wird, fängt eine Pumpe 8 unterhalb des Ausgleichstanks 2 automatisch an zu laufen und schickt das Wasser des Ausgleichstanks 2 in einen zweiten, großen Wasserlagerungstank 10. Dieser Vorgang läuft solange ab, bis das Niedrigniveau des Ausgleichstanks 2 aktiv wird, d.h. wenn das Niveau im Ausgleichstank 2 niedrig ist schaltet sich der Sensor 12 für niedriges Niveau ein und stoppt die Pumpe 8.

Der insbesondere 5-Tonnen fassende Tank 10 ist letztlich ein Ausgleichs- und Zuführungstank. Er dient der Zuführung des im Prozess zu verwendenden Wassers in die Sterilisationseinheit und der Lagerung des Wasser, welches im Prozess verwendet wurde, um es später wieder zu verwenden. Das Arbeitsprinzip, das sich dahinter verbirgt ist, dass der 5-Tonnen-Tank 10 versucht, sein Niveau mit dem Wasser, welches aus dem kleinen Ausgleichstank 2 kommt zu erreichen. Falls das ankommende Wasser aber nicht ausreicht, um das Niveau zu erreichen, schaltet sich dessen Niedrigniveausonde 14 ein und der 5-Tonnen-Tank 10 beginnt automatisch von außerhalb über eine Leitung 16 und ein Ventil 18 zusätzliches Wasser 19 zu holen. Dieser Vorgang geht solange, bis die Hochniveausonde 20 aktiv wird. Wenn das Wasser aus dem kleinen Ausgleichstank 2 das Niveau des 5-Tonnen-Tanks 10 überschreitet, wird es zum Abfließen gebracht. Die Pumpe 22 unterhalb des 5-Tonnen-Tanks 10 läuft je nach Niveau des Ausgleichstanks der Sterilisationseinheit oder dauerhaft, wenn die Sterilisationseinheit in Betrieb ist. Das Niveau des Ausgleichstanks 2 oder 10 der Sterilisationseinheit wird bevorzugt automatisch gemessen (2-20 mA) und mit dem proportionalen Ventil im Eingang lässt sich das Niveau des Ausgleichstanks konstant halten. Das Niveau lässt sich auch durch ein in den Ausgleichstank anzubringendes mechanisches Schwimmelement konstant halten.

Im Bereich B befinden sich die Zu- und Abflüsse der Wassersterilisationseinheit. Im Eingangsbereich befindet sich ein weiterer Ausgleichstank 24 für beispielsweise 500 Liter. Vor dem Ausgleichstank 24 sind ein proportionales Ventil 26, ein Wassereintrittsventil 28 und im Ausgang des Ausgleichstanks 24 eine Pumpe 30 vorgesehen.

Im Ausgangsbereich des Bereichs B befinden sich Ventile 32, 33, 34 zur Umleitung an den Ausgleichstank, den Abfluss und den Tanks zur Lagerung sterilisierten Wassers. Über das Ventil 33 kann ferner Wasser abfließen.

Im Bereich C befindet sich eine Heißwassereinheit 40 zur Gewährleistung des Wärmetransfer und der Sterilisationstemperatur. Für den Wärmetransfer wird ein Platten- oder Röhren-Wärmetauscher bzw. die PHE oder THE Methode angewendet. Innerhalb des Systems befinden sich sechs Sektionen 41 bis 46 für den Wärmetransfer. In Bereich C werden von diesen sechs Sektionen die ersten drei Sektionen 41 bis 43 verwendet. Von diesen Sektionen dienen die erste und die zweite Sektion 41, 42 der Vorheizung vor der Sterilisation und helfen, die Sterilisationstemperatur zu erreichen. Der Druckabfall im ersten und zweiten Abschnitt wird durch die Pumpe 30 unterhalb des Ausgleichstanks 24 gewährleistet. Die wassergekühlte Unterstützungspumpe 47 zur Druckerhöhung dient dazu, den Druckabfall in den anderen Bereichen zu entgegnen und einen kontinuierlichen Fluss zu gewährleisten. Die dritte Sektion 43 dient der Erreichung der Sterilisationstemperatur.

Die Heißwassereinheit ist ein abgeschlossenes Kreislaufsystem und arbeitet insbesondere mit 6 Bar Dampfdruck. Mit Hilfe des Druckgebers 48, insbesondere PT 100, der sich im Eingang einer Holder-Einheit 50 befindet und eines proportionalen Ventils 52 mit Dampfzugang wird das Heißwassersystem so mit Dampf versorgt, dass der Holder 50 die Set- oder Vorgabe-Temperatur erreicht. Im Heißwassersystem befindet sich für den Dampf ein Plattenwärmetauscher zum Erhitzen des Wassers, ein Element gegen Dampfkondensation eine Heißwasserpumpe, ein per Hand bedienbares Ventil zum Steuern des Wasserflusses und eine Zuführungsvorrichtung zum Füllen des Heißwassersystems.

Im Bereich D befindet sich die Holder-oder Vorgabeeinheit 50, welche die Sterilisation durchführt. Der Druckgeber 48 im Eingang die Holdereinheit 50 kontrolliert das Dampfventil 56 in der Heißwassereinheit in Abhängigkeit von der Temperatur des Holder Set. Im Ausgang der Holdereinheit 50 befindet sich ein Druckgeber 54, insbesondere PT 100, sowie ein Ventil 56. Das Ventil 56 ist als Modulationsventil zur Erzeugung eines konstanten Drucks ausgebildet. Der Temperatursensor 54 im Ausgang des Holders 50 erfasst die Ausgangstemperatur des Holder und das Ventil 56 erzeugt einen Gegendruck um das Kochen im System zu verhindern. Im System ist die Holder- oder Vorgabezeit als 300 Sekunden festgelegt worden; allerdings lassen sich auch andere Zeitwerte einstellen. Der Grund dafür, dass 300 Sekunden gewählt wurde, liegt im Erhöhen des Volumens im Inneren des Sterilisationssystems, da die Wartezeit für die Sterilisation des Wassers 1800 Sekunden beträgt, d.h. das gesamte Wasservolumen im System ist in 1800 Sekunden steril und das Gesamtvolumen im System beträgt 2058 Liter. Mit diesem System lassen sich täglich nahezu 40 Tonnen Wasser sterilisieren. Aus dem Gesichtspunkt der Gesundheit von Mensch und Ei ist es notwendig, dass das Wasser, welches im Prozess benutzt wird, auf natürliche Weise sterilisiert wird.

Im Bereich E sieht man die Abkühlungsprozedur. Das sterilisierte Wasser wird bei der Vorbereitung des von den Wartetanks gewünschten und richtig temperierten Wassers verwendet und während der Dauer der Sterilisation innerhalb des Systemzyklus, d.h. während der 1800 Sekunden dauernden Sterilisation, sowie davor und danach, um die Wärme, die in den Ausgleichstank zurückkehrt unter dem Siedepunkt zu halten.

Im Bereich F befinden sich fünf Tanks 61 bis 65 zu jeweils insbesondere 5 Tonnen Fassungsvermögen und ihre Pumpen. Hier wird das sterilisierte Wasser gelagert bzw. von hier aus wird es dem System zugeführt. Die Temperaturen der sterilen Wasser in den Tanks sind im Wesentlichen vorgegeben: Erster Tank 61 mit 95 °C, zweiter Tank 62 mit 95 °C, dritter Tank 63 mit 65 °C, vierter Tank 64 mit 4 °C und fünfter Tank 65 mit 20 °C. Das sterile Wasser mit 95 °C aus dem ersten Tank 61 wird im geschlossenen Heißwassersystem auf 142 °C, das sterile Wasser aus dem zweiten Tank 62 mit 95 °C wird ebenfalls in einem zweiten geschlossenen Heißwassersystem auf 125 °C, das sterile Wasser aus dem dritten Tank 63 mit 65 °C wird auf 72 °C erhöht. Das sterile Wasser aus dem vierten Tank 64 mit 4 °C wird mit 4 °C ins System geschickt. Um einem Aufheizen vorzubeugen, wird es durch einen Kühlungswärmeaustauscher geschickt. Das sterile Wasser aus dem fünften Tank 65 mit 20 °C wird mit 20 °C ins System geschickt. Um einem Aufheizen vorzubeugen wird auch dieses durch einen Kühlungswärmeaustauscher geschickt. Über die jeweiligen Ausgänge wird das sterile Wasser mit den vorgenannten Temperaturen dem System zur Sterilisierung der Eier gemäß den Fig. 2 und 3 zugeführt.

Anmerkung: In Fig. 1 im Bereich F wurde nur beim ersten Tank 61, der Bereich G gezeichnet in dem die Warmwasservorbereitung geschieht. Tank 62 und 63 haben ihre jeweils eigenen entsprechenden Bereiche zum Vorbereiten des Warmwassers. Außerdem bereiten die fünf Tanks die Temperatur ihres Wassers in zyklischer Form selber vor und schicken es zu den weiteren Systemen, wenn diese es benötigen. An den Ausgängen 66 ist das Wasser immer in der gewünschten Temperatur vorhanden. Im Bereich G befinden sich die Heißwassereinheiten 40 und die Kühlungssysteme 58.

Das Wassersterilisationssystem besitzt bevorzugt folgende technischen Eigenschaften:
Kapazität 10 000 l\h
Rohrdurchmesser 51 mm SMS
Rohrinnendurchmesser 48,5 mm
Volumen im Rohr 1,847 I\m
Holding tube Zeit 300 Sekunden
Holding tube Länge 451182 mm
Holding tube Volumen 833,3 Liter
Strömungs velocity 1,5 m\Sekunde
Gesamtvolumen des Wassersterilisationssystems 2058 Liter
Heißwasserkapazität 14 000 I\h
Wassereintrittstemperatur variabel
Wasseraustrittstemperatur +4 °C , +20 °C und 95 °C
Benötigte Strommenge des Systems 380 VAC 50 Hz
Benötigter Luftdruck des Systems 6 Bar trockene Luft
Benötigter Dampfdruck des Systems 6 Bar

Im Rahmen der Erfindung können entsprechend den Anforderungen auch andere Eigenschaften vorgegeben sein.

In Fig. 2 wird die Batch-Sterilisation der Eier in Schalen gezeigt, und nachfolgend wird das Arbeitsprinzip erläutert. Es ist wenigstens ein Druckbehälter 70 vorgesehen sind, um das Kochen des Wassers zu verhindern. Ferner wird in dem oder den Druckbehältern ein Druck von wenigstens 0,4 Bar vorgegeben und je nach Anforderungen und/oder Einsatzbedingungen bis zu 7 Bar.

Nach der Platzierung der Eier in den Druckbehälter 70 in einer Reihe, wurde in die Behälter sterile Luft mit insbesondere 0,5 Bar angewendet.

Um die sterile Luft mit dem erforderlichen Druck zu erzeugen und durch die Eingangsleitung 72 einzuleiten, sind insbesondere folgende Komponenten vorgesehen: ein Luftkompressor, der kein Öl und kein Wasser produziert, Stoppventil, Strainer, zwei Stück Luftfilter/Ultrafilter, Sicherheitsventil 74 und ein proportionales Ventil. Bevor dieses Luftsystem den Betrieb aufnimmt, wird vor dem Stoppventil und/oder einem Rückschlagventil die Luftstrecke 1800 Sekunden lang mit Dampfdruck von 2,5 Bar sterilisiert. Die zwei Filter auf der Hauptdampfstrecke dienen dazu, mögliche Partikel aus dem Dampf zurückzuhalten.

Die gemäß Fig. 1 im Bereich F vorbereiteten sterilen Wasser unterschiedlicher Temperatur, werden im Bereich G erhitzt oder gekühlt, nach einer bestimmten Reihenfolge über die Ausgangsleitungen 66 und die angeschlossenen Ventile 81 bis 85 in den oder die Druckbehälter 70 geleitet. Erfindungsgemäß werden die Eintritts- und Austrittsvorgänge derart durchgeführt, dass diese ohne Verzögerungen und/oder unmittelbar nacheinander erfolgen. Mittels einer nicht dargestellten Steuereinheit, welche als Computer, Software oder dergleichen ausgebildet ist oder enthält, werden die Steuerung der Ventile, die Vorgabe und/oder Überwachung der Sterilisierung und der Parameter, wie Temperatur und Zeitdauer, durchgeführt.

Die Eier, die in den Druckbehälter 70 mit 0,5 Bar angeordnet sind, werden in zeitlicher Reihenfolge nach einander unterschiedlichen Temperaturen ausgesetzt, wobei die Temperatur der Eier in dem oder den Druckbehältern zunächst knapp 43°C beträgt. Als erstes wird das sterile Wasser aus dem Tank 63 im Bereich F mit 65 °C abgeholt, im Bereich G auf 72 °C erhitzt und das Stoppventil 82, das Stoppventil 80 geöffnet und gleichzeitig aus neun Stellen in die Druckbehälter 70 auf homogene Weise steriles Wasser mit 72°C bis zu einem vorher berechneten Volumen hineingelassen (Die im System benutzten Ventile sind NC). Nachdem das sterile Wasser mit 72 °C 15 Sekunden gewartet hat, öffnet Ventil 87. Es bleibt solange wie das Volumen des Druckbehälters offen, allerdings wird bei einem Entleerungsvolumen von 75 % das Ventil 85 geöffnet wodurch das vorbereitete sterile Wasser mit 125 °C in den Druckbehälter 70 gelangt. Nachdem auch die restlichen 25 % des Entleerungsvolumens vervollständigt sind, ist das Ventil 87 geschlossen und das Ventil 85 wird am Ende des Füllvolumens geschlossen (Bei der Luft mit 0,5 Bar in den Druckbehälter tritt beim Öffnen der Ventile kein Druckverlust auf, da es einen Zugang aus dem Luftversorgungssystem gibt).

Anmerkung: Die Anwendung mit 125 °C ist nur für die eingangs erläuterte Methode 1 gültig, d.h. in Umgebungen in denen die mikrobiologische Belastung besonders hoch ist.

Nach einer 4 Sekunden langen Halte- oder Wartezeit bei 125 °C wird das Leerungsventil 87 geöffnet und das Wasser, das sich im Siedepunkt befindet wird, während es nach Außen austritt, durch einen Wärmetauscher 88, welcher bevorzugt als Plattenwärmetauscher ausgebildet ist und/oder als eine Abkühleinheit dient, gekühlt und gelagert.

Wenn 75 % der Entleerung erreicht sind, wird das Ventil 81 geöffnet und während das sterile 142 °C heiße Wasser ins Innere fließt und das Entleerungsvolumen erreicht ist, schließt sich das Ventil 87 wieder. Nach einer Wartezeit von 2 Sekunden öffnet sich Ventil 87 wieder und bei 75 % Entleerungsvolumen öffnet sich Ventil 83 und es beginnt das 20 °C warme Wasser einzufließen. Nach dem das Entleerungsvolumen abgeschlossen ist, wird wieder Ventil 87 geschlossen und das Ventil 88 geöffnet (Druckkabine oberes Niveau - Ventil beim Niveau des Überschwappen). Nachdem die erste Abkühlung gemäß der vorher bestimmten Zeit durchgeführt worden ist, wird Ventil 88 geschlossen und Ventil 87 geöffnet. Das Entleerungsvolumen fängt an und bei einer Entleerung von 75% wird Ventil 84 geöffnet. Das sterile Wasser mit 4 °C fängt an in die Druckkabine zu gelangen. Nachdem das Entleerungsvolumen abgeschlossen ist, wird Ventil 87 geschlossen und Ventil 88 geöffnet. Zur Reserve ist ferner ein Ventil 86 vorgesehen. Anmerkung: Wenn sich das Ventil 88 öffnet wirkt das Luftsystem nicht mehr.

Nachdem die Eier bei 4 °C abgekühlt worden sind, werden sie mit steriler Luft gekühlt und somit auf die Umhüllung der Eierschalen vorbereitet.

Anmerkung: Der Bereich in dem sich die Druckkabine befindet und der Bereich in dem die Eier umhüllt werden, wurden vor dem Einsatz sterilisiert und ab der Sterilisation wurde dauerhaft eine positiv sterile Luft angewendet. Die im Luftsystem benutzten Luftfilter-Ultrafilter (air filter-ultrafilters) müssen nach 50maliger Benutzung ausgetauscht werden. Ansonsten kann es dazu führen, dass die Sterilisation nicht aufrechterhalten werden kann.

Anmerkung: Statt der Druckkabine oder des Druckbehälters 70 in der Zeichnung der Fig. 2 kann auch ein röhrenförmiges System verwendet werden.

Gemäß Fig. 3 wird ein kontinuierliches Verfahren bzw. System verwendet, dessen Aufbau und Funktionsweise nun erläutert wird. Nachdem die Eier gelegt wurden, werden sie auf +4 oder +5 °C abgekühlt (die Abkühlung wird vorgenommen, weil es sein kann, dass sie gelagert oder transportiert werden müssen). Insbesondere mit einer Bürstenreibung oder mit einem zentrifugalen oder anderem System wird bei 40 °C das Waschen vorgenommen. Während des Waschens werden zum einen die Schalen gereinigt und zum anderen wird gewährleistet, dass sich die Poren der Eierschalen öffnen.

Nach dem Waschvorgang wird der Spülvorgang verwirklicht. Die Temperatur des Spülvorgangs muss dabei 3 °C wärmer als das Waschwasser sein. Nach dem Spülen werden die Eier per Luftstrahl, Luftwand oder einer anderen möglichen Lufttrocknungsmethode getrocknet.

Anmerkung: Da die oben erwähnten Bearbeitungsschritte vor der Sterilisation durchgeführt werden, wird auf diese Bereiche noch positiver Luftdruck angewendet.

Bei knapp 43 °C durchqueren die gereinigten und mit Luft getrockneten Eier gemäß Pfeil 89 mittels eines Transportmittels 90, insbesondere eines Transportbands, einen sehr engen Bereich, um in den Sterilisationsabschnitt zu gelangen. Während dieser Durchquerung wird wieder eine Luftwand angewendet. Im ersten Bereich 91 erfolgt die erste Erhitzung (72 °C) und/oder im Bereich 91 a die zweite Erhitzung (125 °C). Im zweiten Bereich 92 findet die letzte Erhitzung statt (UHT 142 °C) und die Eier gelangen in die Abkühlbereiche. Im dritten Bereich 93 findet die erste Abkühlung statt (20 °C), im vierten Bereich 94 die zweite Abkühlung (+4 °C), im fünften Bereich 95 findet die Trocknung statt (mit Luft). Im sechsten Bereich 96 wird die Eierschale umhüllt, insbesondere durch Eintauchen, Ansprühen oder ähnliche Umhüllungstechniken, wobei die Wärme zwischen 60 und 70°C vorgegeben ist. Im siebten Bereich 97 erfolgt die Trocknung (mit Luft), im achten Bereich 98 die Kühlung (+4°C) und im neunten Bereich 99 die letzte Trocknung (mit kalter Luft). Das Ei, welches diese Bereiche insbesondere auf dem Förderband 90 durchquert hat, verlässt die Sterilisationseinheit gemäß Pfeil 102 zur nachfolgenden Verpackung und Lagerung. Während des Verlassens wird diese Einheit mit einer Luftwand geschützt und die Eier können mit verschiedenen Verpackungssystemen in die Lagerstätten mit bevorzugt 4°C geschickt werden.

Die Sterilisationseinheit gemäß der gestrichelten Linie 100 ist nach außen zur Umgebung weitestgehend geschlossen und/oder als Gehäuse und/oder Kammer ausgebildet, wird vor der Verwendung sterilisiert. Da in dieser Einheit innen erfindungsgemäß ein positiver Druck aufgebaut wird, findet von Außerhalb kein Eindringen von Luft statt. In den Teilabschnitten, die der Atmosphäre ausgesetzt sind, insbesondere am Eintritt und Austritt des Transportmittels 90 wird bevorzugt eine Luftwand verwendet. Im Erhitzungsbereich kann Wasser, Dampf oder Luft verwendet werden. Falls Wasser verwendet wird, muss dieses vorher sterilisiert worden sein, wie anhand von Fig. 1 erklärt. Wird Dampf verwendet, muss das Wasser, das verdampft wird, qualitativ hochwertig sein und der Dampf muss eng hintereinander geschaltete Filter passieren. Falls Luft verwendet wird, muss das Luftsystem sterilisiert werden, wie anhand von Fig. 2 erklärt. Die sterilisierte Luft kann ohne in Kontakt mit der Lufterhitzungseinheit zu treten erhitzt und im Erhitzungsabschnitt der Sterilisationseinheit verwendet werden.

Die Erfindung wird anhand von Fig. 4 und 5 näher erläutert, wobei die vorstehenden Ausführungen analog gelten und lediglich die neuen bzw. geänderten Komponenten oder Bereiche oder Funktionsweisen im Einzelnen erläutert werden. Unter Berücksichtigung der Tatsache, dass die mikrobielle Belastung in der Zeit bis ein Ei vom Bauernhof an einen Verbraucher gelangt einen Anstieg aufweisen kann, so soll insbesondere die Aufgabe gelöst werden, die Menge der Mikroorganismen, insbesondere Salmonellen und Bakterien, um einen Betrag von mindestens log 7 zu senken. Somit soll ein Niveau gewährleistet werden, bei welchem die mikrobielle Belastung die Gesundheit des Verbrauchers nicht gefährdet. Zusammen mit dieser Senkung der mikrobiellen Belastung soll zudem die Erhaltung der Nährwerte, insbesondere Protein- und Vitaminwert, sichergestellt werden. Gemäß der Erfindung wurde erreicht, dass die Gefahr für die menschliche Gesundheit durch den Konsum eines Eies mit Schale, welches Salmonellen enthält, beträchtlich verringert wird. Durch Laborergebnisse konnte eine Senkung in Höhe von log 8 nachgewiesen werden.

Anhand von Fig. 4 wird die Sterilisierung und Lagerung des zur Sterilisierung von Eier mit Schale verwendeten Wassers, und zwar vor der Verwendung erläutert, wobei folgende Abkürzungen gelten:
- BTD:: Ausgleichsbehälter
- PHE:: Wärmetauscher / Plattenwärmetauscher
- M:: Pumpe
- PT100:: Temperatursensor
- T:: Tank
- V:: Ventil

Der Wasserbedarf des BTD 1 im Wassersterilisierungsbereich und des gesamten Systems wird mit der Öffnung des V1 und der Wasserbedarf des BTD 2 im Warmwasserbereich wird mit der Öffnung des V6 befriedigt. Währenddessen werden M1, M2 und M3 betätigt und das V4 an den BTD 1 gerichtet derart, dass in diesen das Wasser strömt. Die Steuerung der Pumpen, Ventile und weiterer Komponenten erfolgt mittels einer bevorzugt elektrischen oder elektronischen oder auf einen Rechner gestützten Steuereinheit, welche nachfolgend auch als Kontrollgerät oder Steuersystem bezeichnet wird.

Da die vorgegebene Zieltemperatur im Behälter 101 im Wesentlichen +137 °C beträgt, wird das Dampfventil V7 im Warmwasserbereich aktiviert. Damit der BTD 2 die Rücklauftemperatur von 85 °C konstant halten kann, aktiviert die Steuereinheit bzw. das Kontrollgerät anhand der Informationen, die vom PT100 3 kommen, V5. Zur Bewahrung der Eingangstemperatur von +137 °C im Behälter 101 aktiviert das Kontrollgerät anhand der Informationen, die vom PT100 1 kommen, das Dampfventil V7.

Damit der BTD 1 die Rücklauftemperatur unter der Siedetemperatur halten kann, aktiviert das Kontrollgerät anhand der Informationen, die vom PT100 2 kommen, das Ventil V3 und hält die Temperatur konstant bei +85 °C.

Nach der Konstanthaltung der Temperatur von +137 °C im Behälter 101 beginnt die Sterilisierungszeit. Diese Phase hält 30 Minuten an. Fällt die Temperatur im Behälter unter +133 °C, wird die Sterilisierungszeit gestoppt. Nachdem die Temperatur den gewünschten Vorgabewert erreicht, beginnt die 30-Minuten-Phase von Neuem.

Nach der Beendigung der Sterilisierungszeit des Wassers wird die Temperatur des Wassers, das zum BTD 1 zurückläuft auf + 72 °C eingestellt und V3 wird aktiviert. Sobald die Temperatur im PT100 2 einen Wert von 72 °C erreicht, werden die Ventile V4 und V10 aktiviert und der Behälter T3 wird mit +72 °C warmem sterilem Wasser gefüllt.

Nach der Befüllung des Behälters T3 wird das System erneut mit Wasser gefüllt. Nach der 30 Minuten langen Sterilisierungsphase wird eine Ausgangstemperatur von +60 °C eingestellt. Das V9 des T2 wird geöffnet und der T2 wird mit +60 °C warmem sterilem Wasser gefüllt. Danach wird nach der Gewinnung von sterilem Wasser die Ausgangstemperatur auf +4 °C eingestellt und die Ventile V3 und V2 werden aktiviert. Nachdem die Ausgangstemperatur +4 °C erreicht wird, wird V8 geöffnet und T1 wird mit +4 °C warmem sterilem Wasser befüllt.

Alle Behälter werden mit sterilem Wasser befüllt. Zur Bewahrung der Temperatur des sterilen Wassers in den Behältern bzw. Tanks werden hier verschiedene Kreisläufe aktiviert.

Für den Kreislauf des T1 werden V17-M4-V11-V12-PT100 4 aktiviert und die Temperatur von +4 °C im Behälter wird konstant gehalten.

Für den Kreislauf des T2 werden V18-M5-V13-V14-PT100 5 aktiviert und die Temperatur von +60 °C im Behälter wird konstant gehalten.

Für den Kreislauf des T3 werden V19-M6-V15-V16-PT100 6 aktiviert und die Temperatur von +72 °C im Behälter wird konstant gehalten.

Das auf diese Weise gewonnene sterile Wasser ist somit zur in Fig. 5 beschriebenen Anwendung bereit.

Anhand von Fig. 5 wird die Sterilisierung des oder der Eier mit Schale erläutert. Diese Vorrichtung enthält dreizehn Bereiche 111 bis 123, welche nachfolgend als Abschnitte bezeichnet werden.

In den Abschnitten 111 und 119 wird steriler Dampf verwendet. In den Abschnitten 121 und 123 wird dagegen kalte Luft benutzt. Bei den Abschnitten 112, 114 bis 118, 120 liegt steriles Wasser vor. In Abschnitt 113 erfolgt die Reinigung und in Abschnitt 122 die Verpackung oder Umhüllung.

Das +4°C warme sterile Wasser, das sich im Tank T1 bereits im fertigen Zustand befindet, wird hier vom Kreislauf ausgeschlossen und über die Leitung 103 in das System in Fig. 5 befördert. Die Komponenten oder Bestandteile V17-M4-V11 -PT100 4-V101 -V102-V104-V106-V108 werden aktiviert und die Abschnitte 112, 114, 116, 118, 120 in Fig. 5 werden mit +4°C warmem sterilem Wasser befüllt.

Das +60 °C warme sterile Wasser, das sich im Tank T2 bereits im fertigen Zustand befindet, wird über die Leitung 104 in den Abschnitt 115 befördert, indem die Komponenten oder Bestandteile V18-M5-V13-PT100 5-V103 aktiviert werden. Nachfolgend werden die Komponenten des Systems, respektive der Vorrichtung, der Einfachheit halber als Bestandteile bezeichnet.

Das +72°C warme sterile Wasser, das sich in T3 bereits im fertigen Zustand befindet, wird durch die Leitung 105 in den in Fig. 5 gezeigten Abschnitt 117 befördert, indem die Bestandteile V19-M6-V15-PT100 6-V105 aktiviert und/oder geöffnet werden.

Zur Erhaltung der Temperatur des sterilen Wassers in den verschiedenen Abschnitten schließt sich dieses Wasser zu einem Kreislauf mit den Behältern und/oder Tanks in Fig. 4.

In den Abschnitten 111 und 119 wird filtrierter Dampf verwendet. Bei diesen Bereichen bzw. Abschnitten handelt es sich um geschlossene und hydraulisch kontrollierte Systeme, die unter Druck betrieben werden. Für die Temperaturen, die in diesen Abschnitten vorliegen, wurden Dampfdruckwerte festgelegt.

Der zuvor stabilisierte Dampfdruck im Arbeitssystem des Abschnitts 111 steht vor dem V100 bereit. Sobald das V100 aktiviert also geöffnet wird, dringt der Dampf in den hydraulisch gesteuerten und geschlossenen Abschnitt 111 gleichförmig mit +165 °C ein. Nach 1 bis 5 Sekunden, insbesondere 2 Sekunden, Wartezeit wird das V140 aktiviert, so dass der Dampf aus dem Inneren ausgestoßen wird. Gleichzeitig wird die Öffnungsstelle 106 des Abschnitts 111, insbesondere mittels eines hydraulischen Systems, geöffnet.

Der zuvor stabilisierte Dampfdruck im Arbeitssystem des Abschnitts 119 steht vor dem V107 bereit. Sobald das V107 aktiviert und/oder geöffnet wird, dringt der Dampf in den hydraulisch gesteuerten und geschlossenen Abschnitt 112 gleichförmig mit +142°C ein. Nach 1 bis 5 Sekunden, insbesondere 2 Sekunden, Wartezeit wird das V141 aktiviert und /oder geöffnet, so dass der Dampf aus dem Inneren ausgestoßen wird. Gleichzeitig wird die Öffnungsstelle 107 des Abschnitts 112 aufgrund des hydraulischen Systems geöffnet.

Die Abschnitte 114 bis 122 werden von übrigen Abschnitten isoliert und/oder stehen unter positivem Druck, wie mit gestrichelter Linie 109 angedeutet, insbesondere in einem Druckbehälter 109. Der positive Druck oder der Überdruck gegenüber dem Außenraum ist im Wesentlichen größer als 0,4 Bar, bevorzugt größer als 0,5 Bar. Je nach Qualität der Eierschalen wird der positive Druck bis 1,2 Bar, bevorzugt bis 1 Bar vorgegeben.

Der Transport des Eies bzw. der Eier mit Schale von einem Abschnitt zum anderen geschieht anhand von Transportmaschinen. Die Systeme, Komponenten und Maschinen in den Fig. 4 und 5 werden von einer Steuereinheit, bevorzugt drei verschiedenen Steuerungssystemen, insbesondere PLC-Systemen, gesteuert.

Die Funktionen der Bereiche bzw. Abschnitte oder Abteilungen der Vorrichtung gemäß Fig. 5 sowie die entsprechenden Verfahrensschritte werden wie folgt erläutert:
1- Die auf eine Temperatur zwischen + 4 °C und + 10 °C abgekühlten und am Eingang 110 dem System zugeführten Eier werden für den Fall, dass sich auf deren Schale sporenhaltige und sporenfreie Bakterien und Viren befinden, vorab sterilisiert. Dieser Vorgang findet bei 165 °C im Abschnitt 111 statt und dauert 1 bis 5 Sekunden, insbesondere im Wesentlichen 2 Sekunden. Somit werden Mikroben, Bakterien oder Viren der Schale vernichtet, so dass jene bei der nachfolgenden Wärmebehandlung, insbesondere durch sich hierbei öffnende Poren der Schale, noch nach innen eindringen können.
2- Danach werden die Eier, insbesondere schockartig, abgekühlt auf + 4 ° C, 1 bis 5 Minuten, insbesondere eine Minute, lang bei + 4 °C abgekühlt und der Waschabschnitt bzw. der Wascheinheit 113 zugeführt. Erfindungsgemäß wird somit erreicht, dass die Sterilisationstemperatur das Eiweiß und das Eigelb nicht unzulässig erwärmt.
3- Die Eier werden zwischen + 10 °C und + 20 °C ohne Zufuhr von Chemikalien mit Bürsten oder mit einer ähnlichen Methode mit sauberem Wasser gewaschen und in kaltem Zustand an das System weitergeleitet. Dieser Vorgang in dem Abschnitt 113 dauert ca. 3 bis 8 Minuten, insbesondere 5 Minuten.
4- Damit die Innentemperatur der Eier, die von der Wascheinheit 113 kommen, konstant gehalten werden kann, werden die Eier in die +4 °C warme Abteilung 114 gefördert und in dieser aufgenommen, in der sie 1 bis 5 Minuten, insbesondere 2 Minuten, bleiben.
5- Die Eier, die eine konstante Temperatur aufweisen, werden 10 bis 20 Minuten, insbesondere 14 bis 16 Minuten, lang bei +60 °C in der Vorwärmabteilung 115 gehalten. Während sich die Eier in der Vorwärmabteilung 115 befinden, werden sie 10 bis 20 Minuten, insbesondere 14 bis 16 Minuten, mittels einer Vibrationseinheit 125, einer insbesondere mechanischen Vibration ausgesetzt. Der Zweck dieser bevorzugten Ausgestaltung davon liegt darin, dass eine Proteindenaturierung verhindert werden soll. Genauer: Bei der effektiven Vernichtung der Salmonellen im Eigelb, das das Zielgebiet darstellt, ist der Teil, der zuerst mit Wärme konfrontiert wird, das Eiweiß. Die Wärme dringt danach ins Eigelb ein. Daher ist das Eiweiß zu schützen. Denn bis die Wärme das Eigelb erreicht, kann bereits eine Proteindenaturierung stattfinden. Aus diesem Grund wird das Ei erfindungsgemäß einer insbesondere mechanischen Vibration ausgesetzt.
6- Die Eier, die die Vorwärmabteilung 115 verlassen, werden, ohne dass eine Reduzierung der Wärme stattfindet, zur Abkühlung des Eiweißes, das lange Zeit wärmebehandelt wurde, in die +4 °C warme Kälteabteilung 116 aufgenommen. Hier bleiben die Eier 1 bis 5 Minuten, insbesondere 2 Minuten. Hierbei handelt es sich um einen Gefrierschock, der die Proteindenaturierung, insbesondere des Eiweißes, verhindert und die Wärme im Eigelb konstant hält. Es wird auch gewährleistet, dass die Behälterzeit und somit die Wärmebehandlung im Eigelb fortgesetzt wird. Es ist hierbei von besonderer Bedeutung, dass einerseits das Eiweiß von außen herabgekühltwird, während andererseits die Wärme nach innen noch in das Eigelb eindringt unter Fortsetzung dessen Wärmebehandlung und dort vorhandenen Mikroben, Bakterien und sonstige Erreger abgetötet werden.
7- Die Eier, die aus der Abteilung 116 mit +4 °C herauskommen, werden 10 bis 20 Sekunden, insbesondere 15 Sekunden, lang in der Abteilung 117 mit +72 °C aufgenommen. Da somit die Wärme erhöht und die Proteindenaturierung, insbesondere des Eiweißes, verhindert werden, wird die Wärmebehandlung im Eigelb fortgesetzt.
8- Die Wärmebehandlung wird fortgesetzt und damit keine Proteindenaturierung stattfindet, werden erfindungsgemäß die Eier in der Abteilung 118 erneut einem Gefrierschock bei +4 °C für 1 bis 5 Minuten, insbesondere 2 Minuten, ausgesetzt. Da in dieser Zeit die Kälte nicht bis ins Eigelb eindringen kann und folglich hier keine Wärmereduzierung stattfindet, wird die Behälterzeit und / oder Wärmebehandlung im Eigelb fortgesetzt.
9- Nach dem Gefrierschock werden die Eier +142 °C für 1 bis 5 Sekunden, insbesondere 2 Sekunden, in die UHT-Abteilung 119 (Ultra High Temperature) aufgenommen. Mit Beendigung dieser Prozedur sind viele wärmeresistente und nicht-resistente Bakterien und Viren vernichtet.
10- Da die mikrobiologische Belastung in den Eiern abnimmt, werden diese erfindungsgemäß zur schnellen Abkühlung für 5 bis 10 Minuten in die Kälteabteilung 120 mit +4 °C aufgenommen. Am Ende dieser Dauer wird die Verweilzeit oder Behälterzeit erreicht. Da im nächsten Schritt die Beschichtung der Eierschale stattfindet und nach dem Beschichtungsprozess die Kälteweiterleitung schwächer wird, ist der Aufenthalt in der Kälteabteilung länger.
11- Bei den nun abgekühlten Eiern werden die Wasserschichten auf der Eierschale vor dem Beschichtungsprozess mit einer Lüftungsanlage 121 getrocknet. Der Trocknungsvorgang dauert ca. 3 bis 8 Sekunden, insbesondere ca. 5 Sekunden.
12- Die abgekühlten Eier werden in einem vom Lebensmittelkodex vorgeschriebenen System 122 beschichtet (Lebensmittelparaffine, Biomaterial) bzw. steril verpackt.
13- Nach dem Beschichtungsprozess werden die Eier an die Kalttrocknungsabteilung 123 und anschließend an die Verpackungsabteilung weitergeleitet, wobei bevorzugt eine Temperatur von zumindest näherungsweise +4°C vorgegeben und/oder eingehalten wird.

### LABORDATEN BEZÜGLICH DER UNTERSUCHUNG KEIMFREIER EIER

1. STUDIE (Zuführung einer bestimmten Menge von Salmonellen an das Ei und Feststellung der Menge, die vernichtet wird.) Diese Studie basiert auf Eiern, die verpackt im Supermarkt verkauft werden. Die Analysen wurden von der Kontroll- und Labordirektion der Provinz Mersin, Türkei, durchgeführt. Diese Analyse besteht aus folgenden Schritten:
   a) Zur Verfügung stehende Salmonellen: Als Testbakterie wurde bei der Studie der Typ Salmonella typhimurium (ATCC 14028) verwendet. Für den fertig zur Verfügung gestellten und zertifizierten Bakterienstamm wurden die Voraussetzungen für eine Vermehrung um einen Anteil von 10⁸ geschaffen: 41°C und 24 Stunden Inkubationszeit. Die Bakterien, die sich während der Inkubationszeit vermehrt haben, wurden in die Eier injiziert, und es wurde ihre reelle Zahl ermittelt. Bei der Ermittlung der reellen Zahl wurden gleichzeitig zwei unterschiedliche Methoden zugrunde gelegt. Bei der ersten Methode handelt es sich um die Ausbreitung auf der Oberfläche im klassischen festen Medium. Die für die Studie vorbereiteten Bakterien wurden verdünnt und in mehreren Schichten auf die Oberfläche des zuvor bereitgestellten Mediums, das in Petrischalen aufbewahrt wurde, aufgetragen. Die Ergebnisse wurden ausgezählt und die Menge der Salmonellen wurde ermittelt. Bei der zweiten Methode handelt es sich um das sogenannte TEMPO-System der Firma Biomerieux, bei der die Gesamtzahl der Lebewesen ermittelt wurde. Die Ergebnisse basieren auf dem Vergleich beider Methoden.
   b) Injektion der Salmonellen in das Ei: Mit Hilfe von Biologen wurde in einer sterilen Umgebung jeweils eine kleine Öffnung in die Eier gebohrt, so dass eine Spritze in die Öffnung hineinpasst. Durch diese Öffnungen wurden etwa 10⁸ der Bakterien (100.000.000 /ml) zu je 1 ml in 6 Eier injiziert. Die Öffnungen wurden mit Sekundenkleber zugeklebt und mit Alufolie zugedeckt.
   c) Vorbereitung der Verdünnung: Die Bakterien wurden um 10⁷ verdünnt. Mit der gleichen Methode wurden wieder zu je 1 ml dieser Substanz in 6 Eier injiziert. Die Auszählung der 10⁷ Bakterien geschieht wie unter a) beschrieben. Die Verdünnung wurde fortgesetzt. Es wurden weitere Verdünnungen um 10⁶, 10⁵ und 10⁴ vorbereitet. Von jeder verdünnten Substanz wurden 6 Eier zu je 1 ml injiziert. Insgesamt wurden bei 5 unterschiedlichen Verdünnungen (10⁸, 10⁷, 10⁶, 10⁵ und 10⁴) je 6 Eier injiziert, so dass insgesamt 30 injizierte Eier vorlagen.
   d) Sterilisierungsprozess: Die vorbereiteten Mustereier wurden im gleichen Labor einem Sterilisierungsprozess unterzogen. Am Ende dieses Prozesses wurden die Eier in diesem Labor untersucht.
   e) Untersuchung der Eier: Die Eier, die einer Sterilisierung unterzogen wurden, wurden im gleichen Labor analysiert. Bei allen Eiern wurde eine Feststellung der Salmonellen-Menge durchgeführt. Dabei wurde die klassische Methode der Auftragung auf die Oberfläche angewandt.
   f) Ergebnisse der Bakterienkonzentration: Bei der Untersuchung der injizierten Salmonellen wurde deren Menge, die auf 10⁸ geschätzt wurde, anhand von Tests als 3,6x10⁸ (360.000.000 /ml) bestätigt. Des Weiteren wurden auch folgende Salmonellenmengen bestätigt: 10⁷ (3,6 x10⁷ = 36.000.000), 10⁶ (3,6 x10⁶ = 3.600.000), 10⁵ (3,6 x10⁵ = 360.000), 10⁴ (3,6 x10⁴ = 36.000).
   g) Ergebnisse: Laut dieser Ergebnisse wurden bei den Eiern, in die 3,6 x10⁷ (36.000.000) Salmonellen/ml injiziert wurden, alle Salmonellen vernichtet. Bei einigen Eiern, in die 3,6 x10⁸ (360.000.000) Salmonellen/ml injiziert wurden, konnte eine Vermehrung der Salomonellen festgestellt werden. Die übrigen Salmonellen wurden jedoch alle vernichtet. Im Folgenden wird eine detaillierte Aufstellung der Ergebnisse aufgeführt.

### SALMONELLEN-LABORTESTS

| Anzahl der in das Ei injizierten Salmonellen (Salmonellen / ml) | | | | | Ei Nr. | Injektion | Ergebnis | |
|---|---|---|---|---|---|---|---|---|
| 10,8 | 3,6 | 360.000.000 | Salmonellen | Bakterien | 1 | ins Eigelb | 760 | Bakterien (1) |
| 10,8 | 3,6 | 360.000.090 | Salmonellen | Bakterien | 2 | ins Eigelb | 800 | Bakterien (1) |
| 10,8 | 3,6 | 360.000.000 | Salmonellen | Bakterien | 3 | zur Hälfte ins Eigelb u. zur Hälfte ins Eiweiß | 20 | Bakterien (1) |
| 10,8 | 3,6 | 360.000.000 | Salmonellen | Bakterien | 4 | zur Hälfte ins Eigelb u. zur Hälfte ins Eiweiß | 0 | Bakterien |
| 10,8 | 3,6 | 360.000.000 | Salmonellen | Bakterien | 5 | ins Eiweiß | 0 | Bakterien |
| 10,8 | 3,6 | 360.000.000 | Salmonellen | Bakterien | 6 | ins Eiweiß | 0 | Bakterien |
| 10,7 | 3,6 | 36.000.000 | Salmonellen | Bakterien | 7 | ins Eigelb | 0 | Bakterien |
| 10,7 | 3,6 | 36.000.000 | Salmonellen | Bakterien | 8 | ins Eigelb | 0 | Bakterien |
| 10,7 | 3,6 | 36.000.000 | Salmonellen | Bakterien | 9 | zur Hälfte ins Eigelb u. zur Hälfte ins Eiweiß | 0 | Bakterien |
| 10,7 | 3,6 | 36.000.000 | Salmonellen | Bakterien | 10 | zur Hälfte ins Eigelb u. zur Hälfte ins Eiweiß | 0 | Bakterien |
| 10,7 | 3,6 | 36.000.000 | Salmonellen | Bakterien | 11 | ins Eiweiß | 0 | Bakterien |
| 10,7 | 3,6 | 36.000.000 | Salmonellen | Bakterien | 12 | ins Eiweiß | 0 | Bakterien |
| 10,6 | 3,6 | 3.600.000 | Salmonellen | Bakterien | 13 | ins Eigelb | 0 | Bakterien |
| 10,6 | 3,6 | 3.600.000 | Salmonellen | Bakterien | 14 | ins Eigelb | 0 | Bakterien |
| 10,6 | 3,6 | 3.600.000 | Salmonellen | Bakterien | 15 | ins Eigelb u. zur Hälfte ins Eiweiß | 0 | Bakterien |
| 10,6 | 3,6 | 3.600:000 | Salmonellen | Bakterien | 16 | zur Hälfte ins Eigelb u. zur Hälfte ins Eiweiß | 0 | Bakterien |
| 10,6 | 3,6 | 3.600.000 | Salmonellen | Bakterien | 17 | ins Eiweiß | 0 | Bakterien |
| 10,6 | 3,6 | 3.600.000 | Salmonellen | Bakterien | 18 | ins Eiweiß | 0 | Bakterien |
| 10,5 | 3,6 | 360.000 | Salmonellen | Bakterien | 19 | ins Eigelb | 0 | Bakterien |
| 10,5 | 3,6 | 360.000 | Salmonellen | Bakterien | 20 | ins Eigelb | 0 | Bakterien |
| 10,5 | 3,6 | 360.000 | Salmonellen | Bakterien | 21 | zur Hälfte ins Eigelb u. zur Hälfte ins Eiweiß | 0 | Bakterien |
| 10,5 | 3,6 | 360.000 | Salmonellen | Bakterien | 22 | zur Hälfte ins Eigelb u. zur Hälfte ins Eiweiß | 0 | Bakterien |
| 10,5 | 3,6 | 360.000 | Salmonellen | Bakterien | 23 | ins Eiweiß | 0 | Bakterien |
| 10,5 | 3,6 | 360.000 | Salmonellen | Bakterien | 24 | ins Eiweiß | 0 | Bakterien |
| 10,4 | 3,6 | 36.000 | Salmonellen | Bakterien | 25 | ins Eigelb | 0 | Bakterien |
| 10,4 | 3,6 | 36.000 | Salmonellen | Bakterien | 26 | ins Eigelb | 0 | Bakterien |
| 10,4 | 3,6 | 36.000 | Salmonellen | Bakterien | 27 | zur Hälfte ins Eigelb u. zur Hälfte ins Eiweiß | 0 | Bakterien |
| 10,4 | 3,6 | 36.000 | Salmonellen | Bakterien | 28 | zur Hälfte ins Eigelb u. zur Hälfte ins Eiweiß | 0 | Bakterien |
| 10,4 | 3,6 | 36.000 | Salmonellen | Bakterien | 29 | ins Eiweiß | 0 | Bakterien |
| 10,4 | 3,6 | 36.000 | Salmonellen | Bakterien | 30 | ins Eiweiß | 0 | Bakterien |

### Anmerkung:

(1) Bakterienmenge, die nicht vernichtet werden konnte
   Die übrigen Ergebnisse belegen die gewünschte Vernichtung aller Bakterien
2. STUDIE (Feststellung der Änderung der Protein- und Vitaminwerte nach der Injizierung des Eies).
   Bei dieser Studie wurden tagesfrische Eier des gleichen Stalls verwendet.
   Die Analysen wurden von der Firma DÜZEN NORWEST Çevre Sa 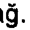 Hiz. Egitim Dan.ic. 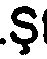 ti., Türkei, durchgeführt.

Diese Analyse besteht aus folgenden Schritten:
a) Vorbereitung der Eier: 18 Eier des gleichen Stalls wurden zur Verfügung gestellt. Hiervon wurden 9 Eier dem Sterilisierungsprozess unterzogen. Danach wurden diese abgekühlt und im kühlen Zustand dem Labor zugeführt.
b) Analyse der Eier: Der Analyse lagen sowohl die 9 Eier zu Grund, die nicht dem Sterilisierungsprozess unterzogen wurden, als auch jene 9 Eier, die diesem Prozess unterlagen. Die Untersuchung fand in zwei separaten Gruppen statt. Im Folgenden werden die Ergebnisse der Analyse aufgeführt.

**LABORERGEBNISSE ZUR FESTSTELLUNG DER ÄNDERUNG DER PROTEIN- UND VITAMINWERTE STERILER EIER**

| PARAMETER | EINHEIT | ERGEBNISSE DER CHEMISCHEN ANALYSE |
|---|---|---|
| Protein | gr | 6,3 |
| Vitamin B1 (Thiamin) | mg | 0,3 |
| Vitamin B6 (Piridoxin) | mg | 1,7 |
| Vitamin E (a-Tocopherol) | mg | 1,3 |
| Vitamin B2 (Riboflavin) | mg | 0,2 |
| Niacin | mg | 10 |
| Vitamin A | IU | 701,4 |
| Vitamin D | IU | < 4 |
| Folsäure | mg | 0,2 |

Ein Ei wiegt 51,8 gr.
Grenzen der Nachweismethode
Durch das Deutsche Akkreditierungssystem Prüfwesen (DAP) bestätigte Testparameter. Bei diesen Ergebnissen handelt es sich um nicht-sterilisierte Eier.

| | | |
|---|---|---|
| Protein | gr | 6,3 |
| Vitamin B1 (Thiamin) | mg | 0,5 |
| Vitamin B6 (Piridoxin) | mg | 2,4 |
| Vitamin E (a-Tocopherol) | mg | 1,5 |
| Vitamin B2 (Riboflavin) | mg | 0,3 |
| Niacin | mg | 8,3 |
| Vitamin A | IU | 760 |
| Vitamin | IU | < 4 |
| Folsäure | mg | 0,1 |

Ein Ei wiegt 53,1 gr.
Grenzen der Nachweismethode
Durch das Deutsche Akkreditierungssystem Prüfwesen (DAP) bestätigte Testparameter. Bei diesen Ergebnissen handelt es sich um sterilisierte Eier.

Die vorstehend erläuterten Werte und Parameter der Methode und der Vorrichtung haben sich insbesondere bei Einsatz der beschriebenen Komponenten als besonders vorteilhaft und zweckmäßig erwiesen.

### FAZIT

Die erfindungsgemäße Methode, die Vorrichtung zur Durchführung der Methode sowie die Verwendung der Vorrichtung sind eine nützliche Entwicklung zur Vernichtung, Einschläferung, Neutralisierung und der Einschränkung des Wirkungskreises neu entdeckter oder noch zu entdeckender schädlicher Mikroorganismen und Viren.

### Bezugszeichen

- 2: erster Tank, kleiner Ausgleichstank
- 4: Pfeil, zurückgeführtes Wasser
- 6: Sonde für hohes Niveau in 2
- 8: Pumpe
- 10: zweiter Tank, großer Ausgleichs- und Zuführtank
- 12: Sensor für niedriges Niveau in 2
- 14: Niveauniedrigkeitssonde von 10
- 16: Leitung
- 18: Ventil
- 19: zusätzliches Wasser
- 20: Hochniveausonde
- 22: Pumpe
- 24: weiterer Ausgleichstank
- 26: Ventil
- 28: Wassereintrittsventil
- 30: Pumpe
- 32- 34: Ventile
- 40: Heißwassereinheit
- 41 bis 46: Sektion für den Wärmetransfer
- 47: Unterstützungspumpe
- 48: Druckgeber
- 50: Holder-Einheit / Vorgabeeinheit
- 54: Temperatursensor / Pt 100
- 56: Dampfventil
- 57: Aufheizeinheit mit 3 Bar Dampf
- 58: Abkühlungseinheit
- 59: Abkühlungseinheit mit Eiswasser
- 61 bis 65: Tank
- 66: Ausgänge
- 70: Druckbehälter
- 72: Eingangsleitung der sterilen Luft
- 74: Sicherheitsventil
- 76: Rückschlagventil
- 78: PI / Druckindikator
- 79: PT / Druckgeber
- 80 bis 86: Stoppventil / Sperrventil
- 87: Leerungsventil
- 88: Wärmetauscher / Abkühleinheit
- 89: Pfeil
- 90: Transportmittel / Transportband
- 91 bis 99: Bereich
- 100: Sterilisationseinheit / Kammer
- 101: Behälter
- 102: Pfeil
- 103 bis 105: Leitung
- 106 bis 108: Öffnungsstelle
- 109: gestrichelte Linie / Druckbehälter
- 110: Eingang
- 111 bis 123: Abschnitt / Bereich / Abteilung
- 125: Vibrationseinheit
- BTD: Ausgleichsbehälter
- PHE: Wärmetauscher / Plattenwärmetauscher
- M: Pumpe
- PT: Temperatursensor
- T: Tank
- V: Ventil

## Patentansprüche

1. Methode, mit welcher Eier in Schale mittels eines flüssigen oder gasförmigen oder dampfförmigen Mediums einer Wärmebehandlung unterzogen werden, wobei eine Pasteurisierung bei einer Temperatur in einem Bereich zwischen 70 bis 75°C durchgeführt wird, **dadurch gekennzeichnet, dass** die Eier vor der Pasteurisierung einer Vorwärmung bei einer Temperatur von 60°C mit nachfolgender schockartiger Abkühlung auf 4° bis 5°C unterzogen werden, dass die Pasteurisierung während einer Zeitdauer zwischen 12 bis 18 Sekunden durchgeführt wird, dass nachfolgend eine Ultrahocherhitzung bei einer Temperatur im Bereich zwischen 140 bis 145°C während einer Zeitdauer zwischen 1 bis 5 Sekunden durchgeführt wird und schließlich die Eier schockartig auf eine Temperatur von 4 bis 5° C gekühlt werden, wobei die Wärmebehandlung bei einem positiven Druck von zumindest im Wesentlichen 0,4 Bar, bevorzugt 0,5 Bar, durchgeführt wird.

2. Methode nach Anspruch 1, **dadurch gekennzeichnet, dass** die Vorwärmung während 14 bis 16 Minuten durchgeführt wird und / oder dass die anschließende Abkühlung auf 4 bis 5°C während 1 bis 5 Minuten, insbesondere im Wesentlichen 2 Minuten durchgeführt wird.

3. Methode nach Anspruch 1 oder 2, **dadurch gekennzeichnet, dass** während der Vorwärmung die Eier einer Vibration ausgesetzt werden.

4. Methode nach einem der Ansprüche 1 bis 3, **dadurch gekennzeichnet, dass** vor der Vorwärmung die Eier zur Sterilisierung der Schale einer Wärmebehandlung bei einer Temperatur von im Wesentlichen 165° während 1 bis 5 Sekunden, insbesondere im Wesentlichen 2 Sekunden, unterzogen werden.

5. Methode nach einem der Ansprüche 1 bis 4, **dadurch gekennzeichnet, dass** die Eier nach der Sterilisierung und/oder dem Waschen und/oder nach der Pasteurisierung schockartig auf 4° bis 5°C abgekühlt werden.

6. Methode nach einem der Ansprüche 1 bis 5, **dadurch gekennzeichnet, dass** zwischen der Pasteurisierung und der Ultrahocherhitzung eine Erwärmung bei einer Temperatur im Bereich zwischen 121 bis 128°C während einer Zeitdauer von 2 bis 6 Sekunden durchgeführt wird, wobei die Temperatur bevorzugt im Bereich zwischen 123 bis 126°C, insbesondere im Wesentlichen 125°C, vorgegeben wird und die Zeitdauer bevorzugt zwischen 3 bis 6 Sekunden, insbesondere im Wesentlichen 5 Sekunden vorgegeben wird.

7. Methode nach einem der Ansprüche 1 bis 6, **dadurch gekennzeichnet, dass** die Pasteurisierung bei einer Temperatur mit 72°C während zumindest 15 Sekunden durchgeführt wird und/oder dass die Ultrahocherhitzung mit einer Temperatur von 142°C während zumindest 2 Sekunden durchgeführt wird.

8. Methode insbesondere nach einem der Ansprüche 1 bis 4, **dadurch gekennzeichnet, dass** die Wärmebehandlung und/oder die Pasteurisierung und/oder die Ultrahocherhitzung mit dem sterilisierten Medium durchgeführt werden, bevorzugt in sterilisierten Bereichen einer Vorrichtung, und/oder dass das Medium nach der Behandlung der Eier in Schale erneut sterilisiert und zur weiteren Behandlung von Eiern in Schale verwendet wird.

9. Methode nach einem der Ansprüche 1 bis 5, **dadurch gekennzeichnet, dass** die zunächst eine Temperatur von 4 bis 5°C aufweisenden oder auf diese Temperatur gekühlten Eier in Schale vor der Pasteurisierung gewaschen, abgespült und bevorzugt getrocknet werden, wobei das Waschen bei einer Temperatur von zumindest 40°C erfolgt und das Abspülen bei einer Temperatur von zumindest 43°C erfolgt, und/oder dass die Pasteurisierung und/oder die Ultrahocherhitzung unter Einwirkung wenigstens eines vorgegebenen Drucks durchgeführt werden, wobei der Druck bevorzugt im Bereich von 0,4 bis 7 Bar, insbesondere im Bereich von 0,5 bis 1 Bar vorgegeben wird.

## Claims

1. A method by means of which eggs in shells undergo a heat treatment by means of a liquid or gaseous or vaporous medium, wherein pasteurization is carried out at a temperature in the range 70 to 75°C, **characterized in that** prior to pasteurization, pre-heating is carried out on the eggs at a temperature of 60°C with subsequent shock-cooling to 4° to 5°C, **in that** the pasteurization is carried out for a period between 12 and 18 seconds, **in that** subsequently, an ultra high temperature treatment is carried out at a temperature in the range 140 to 145°C for a period in the range 1 to 5 seconds and finally, the eggs are shock-cooled to a temperature of 4°C to 5°C, wherein the heat treatment is carried out at a positive pressure of at least substantially 0.4 bar, preferably 0.5 bar.

2. The method as claimed in claim 1, **characterized in that** preheating is carried out for 14 to 16 minutes and/or **in that** the subsequent cooling to 4 to 5°C is carried out for 1 to 5 minutes, in particular substantially 2 minutes.

3. The method as claimed in claim 1 or claim 2, **characterized in that** during pre-heating, the eggs are exposed to a vibration.

4. The method as claimed in one of claims 1 to 3, **characterized in that** prior to pre-heating, in order to sterilize the shells, the eggs undergo a heat treatment at a temperature of substantially 165° for 1 to 5 seconds, in particular substantially 2 seconds.

5. The method as claimed in one of claims 1 to 4, **characterized in that** following sterilization and/or washing and/or following pasteurization, the eggs are shock-cooled to 4° to 5°C.

6. The method as claimed in one of claims 1 to 5, **characterized in that** between the pasteurization and the ultra high temperature treatment, heating is carried out at a temperature in the range 121 to 128°C for a period of 2 to 6 seconds, wherein the temperature is preferably pre-set in the range 123 to 126°C, in particular substantially 125°C, and the period is preferably pre-set to between 3 and 6 seconds, in particular substantially 5 seconds.

7. The method as claimed in one of claims 1 to 6, **characterized in that** the pasteurization is carried out at a temperature of 72°C for at least 15 seconds and/or **in that** the ultra high temperature treatment is carried out at a temperature of 142°C for at least 2 seconds.

8. The method as claimed in one of claims 1 to 4, **characterized in that** the heat treatment and/or the pasteurization and/or the ultra high temperature treatment is/are carried out with the sterilized medium, preferably in sterilized regions of an apparatus, and/or **in that** following the treatment of the eggs in shells, the medium is sterilized again and used for further treatment of eggs in shells.

9. The method as claimed in one of claims 1 to 5, **characterized in that** prior to pasteurization, the eggs in shells which initially are at a temperature of 4 to 5°C or cooled to this temperature are washed, rinsed and preferably dried, wherein washing is carried out at a temperature of at least 40°C and rinsing is carried out at a temperature of at least 43°C, and/or in that the pasteurization and/or the ultra high temperature treatment is/are carried out under the action of at least a pre-set pressure, wherein the pressure is preferably pre-set in the range 0.4 to 7 bar, in particular in the range 0.5 to 1 bar.

## Revendications

1. Méthode à l'aide de laquelle au moyen d'un milieu liquide ou gazeux ou à l'état de vapeur, on soumet des oeufs dans leur coquille à un traitement thermique, une pasteurisation étant réalisée à une température de l'ordre de 70 à 75 °C, **caractérisée en ce qu'**avant la pasteurisation, on soumet les oeufs à un préchauffage à une température de 60°C avec un refroidissement choc consécutif à de 4° à 5°C, **en ce qu'**on procède à la pasteurisation pendant une période comprise entre 12 à 18 secondes, **en ce qu'**on procède ensuite à un traitement UHT à une température de l'ordre de 140 à 145°C pendant une période comprise entre 1 à 5 secondes et **en ce qu'**on procède finalement à un refroidissement choc des oeufs à une température de 4 à 5°C, le traitement thermique étant réalisé sous une pression positive d'au moins sensiblement 0,4 bar, de préférence de 0,5 bar.

2. Méthode selon la revendication 1, **caractérisée en ce qu'**on procède au préchauffage pendant de 14 à 16 minutes et/ou **en ce qu'**on procède au refroidissement consécutif à de 4 à 5°C pendant de 1 à 5 minutes, notamment pendant sensiblement 2 minutes.

3. Méthode selon la revendication 1 ou la revendication 2, **caractérisée en ce que** pendant le préchauffage, on soumet les oeufs à une vibration.

4. Méthode selon l'une quelconque des revendications 1 à 3, **caractérisée en ce qu'**avant le préchauffage, pour la stérilisation de la coquille, on soumet les oeufs à un traitement thermique, à une température de sensiblement 165°C pendant de 1 à 5 secondes, notamment pendant sensiblement 2 secondes.

5. Méthode selon l'une quelconque des revendications 1 à 4, **caractérisée en ce qu'**après la stérilisation et/ou le lavage et/ou après la pasteurisation, on procède à un refroidissement choc des oeufs à de 4° à 5°C.

6. Méthode selon l'une quelconque des revendications 1 à 5, **caractérisée en ce qu'**entre la pasteurisation et le traitement UHT, on procède à un échauffement à une température de l'ordre de 121 à 128°C pendant une période de 2 à 6 secondes, la température étant prédéfinie de préférence dans la gamme comprise entre 123 à 126°C, notamment sensiblement à 125°C et la période étant prédéfinie de préférence entre de 3 à 6 secondes, notamment sensiblement à 5 secondes.

7. Méthode selon l'une quelconque des revendications 1 à 6, **caractérisée en ce qu'**on procède à la pasteurisation à une température de sensiblement 72°C pendant au moins 15 secondes et/ou **en ce qu'**on procède au traitement UHT à une température de 142°C pendant au moins 2 secondes.

8. Méthode notamment selon l'une quelconque des revendications 1 à 4, **caractérisée en ce qu'**on procède au traitement thermique et/ou à la pasteurisation et/ou au traitement UHT avec le milieu stérilisé, de préférence dans des zones stérilisées d'un dispositif et/ou **en ce qu'**on re-stérilise le milieu après le traitement des oeufs dans leur coquille et on l'utilise pour le traitement ultérieur d'oeufs dans leur coquille.

9. Méthode selon l'une quelconque des revendications 1 à 5, **caractérisée en ce qu'**avant la pasteurisation, on lave, on rince et de préférence on sèche les oeufs dans leur coquille présentant initialement une température de 4 à 5°C ou refroidis à ladite température, le lavage s'effectuant à une température d'au moins 40°C et le rinçage à une température d'au moins 43°C et/ou en ce qu'on procède à la pasteurisation et/ou au traitement UHT sous l'effet d'au moins une pression prédéfinie, la pression étant prédéfinie de préférence dans la gamme de 0,4 à 7 bar, notamment dans la gamme de 0,5 à 1 bar.
